# EUROPEAN PATENT APPLICATION

(11) **EP 4 760 672 A1**
(43) Date of publication of application: **17.06.2026**
(21) Application number: 25220765.9
(22) Date of filing: 04.12.2025
(51) Int. Cl.: G08G 1/01, G06F 16/29, G06N 20/00, H04W 4/029

(54) **SYSTEMS AND METHODS FOR IDENTIFYING COMMERCIAL DOMICILES**

(30) Priority: 12.12.2024 US 202463733394 P
(71) Applicant: GEOTAB Inc., Oakville, ON L6H 7V2 (CA)
(72) Inventor: PERCY, SIMONE ASHA, TORONTO (CA); ALLAN, ROBERT MICHAEL, Kitchener (CA); LEWIS, DANIEL J., Cambridge (CA)
(74) Representative: von Zmuda-Trzebiatowski, Margarethe

(57) **Abstract**

The present disclosure relates to systems and methods for identifying commercial domiciles. An example of one such method includes operating at least one processor to: receive telematics data originating from a plurality of telematics devices installed in a plurality of vehicles; identify, using the telematics data, a vehicle stop zone, each vehicle stop zone comprising a vehicle stop cluster; and identify the vehicle stop zone as a commercial domicile by applying to the vehicle stop cluster of the vehicle stop zone at least one machine learning model trained to classify vehicle stop zones based on one or more vehicle stop features thereof.

## Description

### TECHNICAL FIELD

The present disclosure generally relates to the use of telematics data to provide zone information. More specifically, the present disclosure relates to identifying and classifying vehicle stop zones as commercial domiciles.

### BACKGROUND

Telematics data collected from vehicles may include information, parameters, attributes, characteristics, and/or features associated with the vehicles. For example, telematics data may include data relating to various components of the vehicle (e.g., airbag status, engine data, brake data, transmission data, and the like), location data (e.g., a GPS location), vehicle identifying information, etc.

While telematics data may be used to gain insights about various aspects of the vehicles from which it is collected, the telematics data may also be used to provide insights about the area or areas within which the vehicles operate. For example, using telematics data relating to the location of a vehicle, a user may be able to determine common routes traveled by the vehicle, common stopping locations of the vehicle, and the like, and use that information to identify various types of zones of the area or areas within which the vehicle operates. One example of a zone that may be identified using telematics data is a vehicle stop zone - i.e., an area within which one or more vehicles stop. Examples of vehicle stop zones may include parking lots, roadways having on-street parking, intersections, etc.

Vehicle stop zones may be classified based on the use, or uses, thereof. For example, it may be useful for some users (e.g., vehicle fleet managers) to identify whether a vehicle stop zone is a commercial domicile - i.e., a location owned and/or operated by a commercial entity on, or within, which vehicles may stop. In such examples, users may leverage the identified vehicle stop zones that are classified as commercial domiciles to, for instance, plan parking (e.g., for large and/or heavy-duty vehicles), optimize "last-mile" delivery routes, selecting real estate, sustainability infrastructure development (e.g., the installation of vehicle chargers), etc.

However, the conventional techniques for classification of vehicle stop zones may often be inaccurate and lack spatial stability. In more detail, such conventional techniques may generate vehicle stop zones based solely on vehicle stop clusters and may classify those vehicle stop zones using a rule-based classification. As a result, the conventional techniques for classifying vehicle stop zones may not accurately represent the location, size, shape, etc. of the commercial domicile, may incorrectly classify vehicle stop zones as commercial domiciles (e.g., a false positive), and may represent the location, size, shape, etc. of the commercial domicile to shift over time, regardless of any actual changes to the domicile (i.e., lack spatial stability).

A need therefore exists for improved systems and methods identifying commercial domiciles.

### SUMMARY

In one aspect, the present disclosure relates to a system for identifying commercial domiciles, the system comprising: at least one data storage operable to store telematics data originating from a plurality of telematics devices installed in a plurality of vehicles; and at least one processor in communication with the at least one data storage, the at least one processor operable to: identify, using the telematics data, a vehicle stop zone, each vehicle stop zone comprising a vehicle stop cluster; and identify the vehicle stop zone as a commercial domicile by applying to the vehicle stop cluster of the vehicle stop zone at least one machine learning model trained to classify vehicle stop zones based on one or more vehicle stop features thereof.

According to an embodiment, the at least one processor is operable to identify the vehicle stop zone by: defining a search zone corresponding to a geographical area within which the vehicle stop zone is to be identified; identifying, using the telematics data, a plurality of vehicle stop points located within the search zone, each of the vehicle stop points representing a location at which a vehicle stopped; within each search zone, identifying one or more vehicle stop clusters, each vehicle stop cluster comprising at least one of the vehicle stop points; and identifying the vehicle stop zone based at least in part on each of the one or more vehicle stop clusters.

According to a further embodiment, the at least one processor is further operable to identify the vehicle stop zone by merging vehicle stop clusters that share one or more of the vehicle stop points.

According to a further embodiment, the vehicle stop clusters that share one or more of the vehicle stop points are located within different search zones.

According to a further embodiment, the at least one processor is further operable to identify the vehicle stop zone by: identifying an oversized vehicle stop cluster that occupies an area greater than a predetermined threshold; reclustering the oversized vehicle stop cluster into a plurality of vehicle stop subclusters; and identifying the vehicle stop zone based on each of the plurality of vehicle stop subclusters.

According to a further embodiment, the at least one processor is further operable to identify the vehicle stop zone by merging vehicle stop subclusters that share one or more of the vehicle stop points.

According to a further embodiment, the at least one processor is further operable to identify the vehicle stop zone by defining a reclustering search zone that encompasses at least the oversized vehicle stop zone.

According to a further embodiment, the at least one processor is operable to identify the vehicle stop zone by filtering any vehicle stop zones based on one or more parameters thereof.

According to a further embodiment, the one or more parameters comprise cluster size, cluster density, cluster shape, cluster location, distinct vehicle stops, or a combination thereof.

According to a further embodiment, the one or more vehicle stop features comprise stop time features, stop count features, stop time period features, trip features, operator features, or combinations thereof.

According to a further embodiment, the one or more vehicle stop features comprise an operator stop duration proportion, a vehicle stop duration proportion, a distinct operator vehicle stop count, a median operator trip duration, a weekend trip stop proportion, an operator round trip proportion, a median stop duration, or a combination thereof.

According to a further embodiment, the at least one machine learning model comprises a logistic regression model, a support vector machine (SVM) model, a k-nearest neighbors (KNN) model, a random forest model, an XGBoost model, or a combination thereof.

According to a further embodiment, the at least one processor is further operable to: generate an initial polygon encompassing the commercial domicile; identify, using map data, one or more road segments that intersect the polygon; generate from the initial polygon a plurality of sub-polygons based on the one or more road segments that intersect the polygon; and generating a domicile polygon based on one or more of the sub-polygons within which a vehicle stop point is located.

According to a further embodiment, the at least one processor is operable to generate the domicile polygon by: filtering any sub-polygons within which a vehicle stop point is not located; and merging any sub-polygons within which a vehicle stop point is located.

In another aspect, the present disclosure relates to a method for identifying commercial domiciles, the method comprising operating at least one processor to: receive telematics data originating from a plurality of telematics devices installed in a plurality of vehicles; identify, using the telematics data, a vehicle stop zone, each vehicle stop zone comprising a vehicle stop cluster; and identify the vehicle stop zone as a commercial domicile by applying to the vehicle stop cluster of the vehicle stop zone at least one machine learning model trained to classify vehicle stop zones based on one or more vehicle stop features thereof.

According to an embodiment, the identifying of the vehicle stop zone comprises operating the at least one processor to: define a search zone corresponding to a geographical area within which the vehicle stop zone is to be identified; identify, using the telematics data, a plurality of vehicle stop points located within the search zone, each of the vehicle stop points representing a location at which a vehicle stopped; within each search zone, identify one or more vehicle stop clusters, each vehicle stop cluster comprising at least one of the vehicle stop points; and identify the vehicle stop zone based at least in part on each of the one or more vehicle stop clusters.

According to a further embodiment, the identifying of the vehicle stop zone further comprises operating the at least one processor to merge vehicle stop clusters that share one or more of the vehicle stop points.

According to a further embodiment, the vehicle stop clusters that share one or more of the vehicle stop points are located within different search zones.

According to a further embodiment, identifying of the vehicle stop zone further comprises operating at least one processor to: identify an oversized vehicle stop cluster that occupies an area greater than a predetermined threshold; recluster the oversized vehicle stop cluster into a plurality of vehicle stop subclusters; and identify the vehicle stop zone based on each of the plurality of vehicle stop subclusters.

According to a further embodiment, the identifying of the vehicle stop zone based each of the plurality of vehicle stop subclusters further comprises operating the at least one processor to merge vehicle stop subclusters that share one or more of the vehicle stop points.

According to a further embodiment, the identifying of the vehicle stop zone based each of the plurality of vehicle stop subclusters further comprises operating the at least one processor to define a reclustering search zone that encompasses at least the oversized vehicle stop zone.

According to a further embodiment, the identifying of the vehicle stop zone further comprises operating the at least one processor to filter any vehicle stop zones based on one or more parameters thereof.

According to a further embodiment, the one or more parameters comprise cluster size, cluster density, cluster shape, cluster location, distinct vehicle stops, or a combination thereof.

According to a further embodiment, the one or more vehicle stop features comprise stop time features, stop count features, stop time period features, trip features, operator features, or combinations thereof.

According to a further embodiment, the one or more vehicle stop features comprise an operator stop duration proportion, a vehicle stop duration proportion, a distinct operator vehicle stop count, a median operator trip duration, a weekend trip stop proportion, an operator round trip proportion, a median stop duration, or a combination thereof.

According to a further embodiment, the at least one machine learning model comprises a logistic regression model, a support vector machine (SVM) model, a k-nearest neighbors (KNN) model, a random forest model, an XGBoost model, or a combination thereof.

According to a further embodiment, the method further comprises operating the at least one processor to: generate an initial polygon encompassing the commercial domicile; identify, using map data, one or more road segments that intersect the polygon; generate from the initial polygon a plurality of sub-polygons based on the one or more road segments that intersect the polygon; and generating a domicile polygon based on one or more of the sub-polygons within which a vehicle stop point is located.

According to a further embodiment, the generating of the domicile polygon comprises operating the at least one processor to: filter any sub-polygons within which a vehicle stop point is not located; and merge any sub-polygons within which a vehicle stop point is located.

In another aspect, the present disclosure relates to a non-transitory computer-readable medium having instructions stored thereon executable by at least one processor to implement the methods described herein.

Other aspects and features of the systems and methods of the present disclosure will become apparent to those ordinarily skilled in the art upon review of the following description of specific embodiments.

### BRIEF DESCRIPTION OF THE DRAWINGS

These and other features of the present disclosure will become more apparent in the following detailed description in which reference is made to the appended drawings. The appended drawings illustrate one or more embodiments of the present disclosure by way of example only and are not to be construed as limiting the scope of the present disclosure.
FIG. 1 is a block diagram of various components interacting with an example fleet management system according to an embodiment of the present disclosure.
FIG. 2 is a block diagram of an example fleet management system interacting with an example telematics device and an example vehicle, according to an embodiment of the present disclosure.
FIG. 3 is a block diagram of an example computing device interacting with an example fleet management system, according to an embodiment of the present disclosure.
FIG. 4 is a flowchart of an example method for identifying commercial domiciles, according to an embodiment of the present disclosure.
FIG. 5 is a flowchart of an example method for identifying vehicle stop zones, according to an embodiment of the present disclosure.

### DETAILED DESCRIPTION

Telematics data may be used not only to provide information about a vehicle, but also to provide insights about an area within which the vehicle operates. For example, using telematics data such as vehicle location data, data relating to various components of a vehicle, and the like, a user may identify zones in an area such as routes along which a vehicle operates, vehicle stop zones, etc. In particular, the identification of vehicle stop zones (e.g., parking lots, intersections, etc.) may have a number of applications. For example, a user may classify identified vehicle stop zones based on the use, or uses, thereof by one or more vehicles.

As one example, it may be useful for a user (e.g., a vehicle fleet manager) to identify whether a vehicle stop zone is a commercial domicile - i.e., a location owned and/or operated by a commercial entity on, or within, which vehicles may stop. In such examples, users may leverage the identified vehicle stop zones that are classified as commercial domiciles to, for instance, plan parking (e.g., for large and/or heavy-duty vehicles), optimize "last-mile" delivery routes (i.e., the final portion, or "leg", of a delivery trip), selecting real estate, sustainability infrastructure development (e.g., the installation of vehicle chargers), etc.

However, conventional techniques for classification of vehicle stop zones (e.g., as commercial domiciles) may often be inaccurate and/or lack spatial stability. In more detail, such conventional techniques may generate vehicle stop zones based solely on vehicle stop clusters (i.e., without the consideration of other, external factors such as vehicle infrastructure) and may classify those vehicle stop zones using a rule-based classification. As a result, the conventional techniques for classifying vehicle stop zones may not accurately classify vehicle stop zones as commercial domiciles (e.g., a false positive) and may not represent the location, size, shape, etc. of the commercial domicile, and/or in some cases, may represent such features of the commercial domicile to shift over time, regardless of actual changes to the domicile (i.e., lack spatial stability).

Further, for a given area, there may be there may be hundreds of thousands, or even millions, of data points to process for identify commercial domiciles (e.g., for a vehicle fleet manager managing a vehicle fleet of thousands of vehicles), and conventional techniques for vehicle stop zone identification may not be well-suited to efficiently process such amounts of data.

Thus, it is an objective of the present disclosure to provide advantageous systems and methods for identifying commercial domiciles that are capable of addressing shortcomings of the conventional techniques. For example, in some embodiments, the systems and methods of the present disclosure may identify vehicle stop zones using features other than vehicle stop clusters. In more detail, in such embodiments, the systems and methods described herein may identify the commercial domicile using, for example, map data to inform the size, shape, location, etc. of the commercial domicile based on infrastructure boundaries, topographical boundaries, regulatory boundaries, etc. By using such boundaries to inform the parameters of the commercial domicile, a spatially stable commercial domicile may be identified, as such boundaries are less likely, if ever, to change. In contrast, as described herein, conventional techniques may rely solely on vehicle stop clusters to inform the parameters of the commercial domiciles, which are prone to change (e.g., based on where the vehicles from which the telematics data are obtained may park) over time and, as a result, may generate spatially unstable domiciles (i.e., the parameters of the domiciles such as size, shape, location, etc. may shift over time).

Further, in some embodiments, the systems and methods of the present disclosure may classify vehicle stop zones as commercial domiciles using at least one machine learning model trained to do so based on one or more vehicle stop features of the vehicle stop zones. In such embodiments, the at least one machine learning model may classify vehicle stop zones as commercial domiciles more accurately than, for example, the rule-based classification criteria conventionally used. For example, the at least one machine learning model may adapt over time to classify vehicle stop zones based on, for instance, trends in telematics data, whereas the conventional rule-based classification technique may remain static in that the rules for classification may not change, leading to incorrect classifications over time.

Furthermore, in some embodiments, the systems and methods of the present disclosure may be particularly well-suited to efficient large-scale processing of telematics data such that vehicle stop zones may be identified and classified across relatively large geographical areas, and for a relatively large number of vehicles (e.g., a large vehicle fleet), at once.

Additional advantages will be discussed below and will be readily apparent to those of ordinary skill in the art upon reading the present disclosure.

Reference will now be made in detail to example embodiments of the disclosure, wherein numerals refer to like components, examples of which are illustrated in the accompanying drawings that further show example embodiments, without limitation.

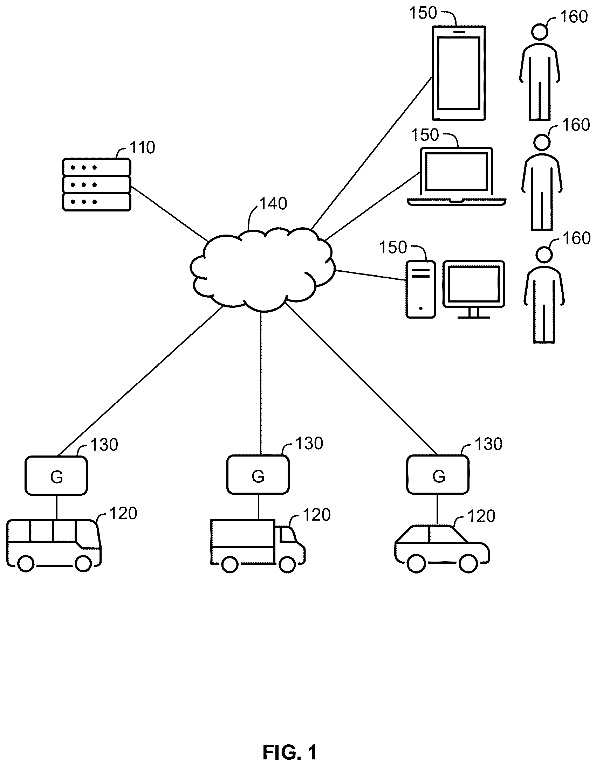

Referring now to FIG. 1, there is shown an example of a fleet management system 110 for managing a plurality of assets equipped with a plurality of telematics devices 130. Each of the telematics devices 130 is capable of collecting various data from the vehicles 120 (i.e., telematics data) and sharing the telematics data with the fleet management system 110. The fleet management system 110 may be remotely located from the telematics devices 130 and the vehicles 120.

The vehicles 120 may include any type of vehicle. For example, the vehicles 120 may include motor vehicles such as cars, trucks (e.g., pickup trucks, heavy-duty trucks such as class-8 vehicles, etc.), motorcycles, industrial vehicles (e.g., buses), and the like. Each motor vehicle may be a gas, diesel, electric, hybrid, and/or alternative fuel vehicle. Further, the vehicles 120 may include vehicles such as railed vehicles (e.g., trains, trams, and streetcars), watercraft (e.g., ships and recreational pleasure craft), aircraft (e.g., airplanes and helicopters), spacecraft, and the like. Each of the vehicles 120 may be equipped with one of the telematics devices 130.

Further, it is noted that, while only three vehicles 120 having three telematics devices 130 are shown in the illustrated example, it will be appreciated that there may be any number of vehicles 120 and telematics devices 130. For example, the fleet management system 110 may manage hundreds, thousands, or even millions of vehicles 120 and telematics devices 130.

In some embodiments, the telematics devices 130 may be standalone devices that are removably installed in the vehicles 120 (e.g., aftermarket telematics devices). In other embodiments, the telematics devices 130 may be integrated components of the vehicles 120 (e.g., pre-installed by an OEM). As described herein, the telematics devices 130 may collect various telematics data and share the telematics data with the fleet management system 110. The telematics data may include any information, parameters, attributes, characteristics, and/or features associated with the vehicles 120. For example, the vehicle data may include, but is not limited to, location data, speed data, acceleration data, fluid level data (e.g., oil, coolant, and washer fluid), energy data (e.g., battery and/or fuel level), engine data, brake data, transmission data, odometer data, vehicle identifying data, error/diagnostic data, tire pressure data, seatbelt data, airbag data, or a combination thereof. In some embodiments, the telematics data may include information relating to the telematics devices 130 and/or other devices associated with or connected to the telematics devices 130. Regardless, it should be appreciated the telematics data is a form of electronic data that requires a computer (e.g., a processor such as those described herein) to transmit, receive, interpret, process, and/or store.

Once received, the fleet management system 110 may process the telematics data obtained from the telematics devices 130 to provide various analysis, predictions, reporting, etc. In some embodiments, the fleet management system 110 may process the telematics data to provide additional information about the vehicles 120, such as, but not limited to, trip distances and times, idling times, harsh braking and driving, usage rates, fuel economy, and the like. Various data analytics may be implemented to process the telematics data. The telematics data may then be used to manage various aspects of the vehicles 120, such as route planning, vehicle maintenance, driver compliance, asset utilization, fuel management, etc., which, in turn, may improve productivity, efficiency, safety, and/or sustainability of the vehicles 120.

A plurality of computing devices 150 may provide access to the fleet management system 110 to a plurality of users 160. The users 160 may use computing devices 150 to access or retrieve various telematics data collected and/or processed by the fleet management system 110 to manage and track the vehicles 120. As will be appreciated, the computing devices 150 may be any suitable computing devices. For example, the computing devices 150 may be any type of computers such as, but not limited to, personal computers, portable computers, wearable computers, workstations, desktops, laptops, smartphones, tablets, smartwatches, personal digital assistants (PDAs), mobile devices, and the like. The computing devices 150 may be remotely located from the fleet management system 110, telematic devices 130, and vehicles 120.

The fleet management system 110, telematics devices 130, and computing devices 150 may communicate through a network 140. The network 140 may comprise a plurality of networks and may be wireless, wired, or a combination thereof. As will be appreciated, the network 140 may employ any suitable communication protocol and may use any suitable communication medium. For example, the network 140 may comprise Wi-Fi^{™} networks, Ethernet networks, Bluetooth^{™} networks, near-field communication (NFC) networks, radio networks, cellular networks, and/or satellite networks. The network 140 may be public, private, or a combination thereof. For example, the network 140 may comprise local area networks (LANs), wide area networks (WANs), the internet, or a combination thereof. Of course, as will also be appreciated, the network 140 may also facilitate communication with other devices and/or systems that are not shown.

Further, the fleet management system 110 may be implemented using one or more computers. For example, the fleet management system 110 may be implements using one or more computer servers. The servers may be distributed across a wide geographical area. In some embodiments, the fleet management system 110 may be implemented using a cloud computing platform, such as Google Cloud Platform^{™} and Amazon Web Services^{™}. In other embodiments, the fleet management system 110 may be implemented using one or more dedicated computer servers. In a further embodiment, the fleet management system 110 may be implemented using a combination of a cloud computing platform and one or more dedicated computer servers.

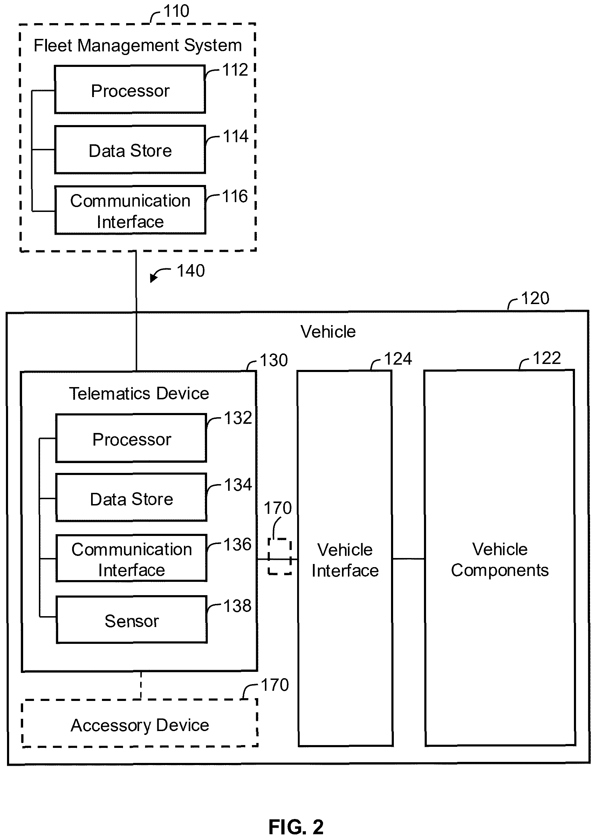

Referring now to FIG. 2, there is illustrated the fleet management system 110 in communication with one of the telematics devices 130 that is installed in one of the vehicles 120. As shown, the fleet management system 110 may include a processor 112, a data storage 114, and a communication interface 116, each of which may communicate with each other. The processor 112, the data storage 114, and the communication interface 116 may be combined into fewer components, divided into additional subcomponents, or a combination thereof. The components and/or subcomponents may not necessarily be distributed in proximity to one another and may instead be distributed across a wide geographical area.

The processor 112 may control the operation of the fleet management system 110. As will be appreciated, the processor 112 may be implemented using one or more suitable processing devices or systems. For example, the processor 112 may be implemented using central processing units (CPUs), graphics processing units (GPUs), field programmable gate arrays (FPGAs), application specific integrated circuits (ASICs), digital signal processors (DSPs), neural processing units (NPUs), quantum processing units (QPUs), microprocessors, controllers, and the like. The processor 112 may execute various instructions, programs, software, or a combination thereof stored on the data storage 114 to implement various methods described herein. For example, the processor 112 may process various telematics data collected by the fleet management system 110 from the telematics devices 130.

Various data for the fleet management system 110 may be stored on the data storage 114. The data storage 114 may be implemented using one or more suitable data storage devices or systems such as random-access memory (RAM), read only memory (ROM), flash memory, hard disk drives (HDDs), solid-state drives (SSDs), magnetic tape drives, optical disc drives, memory cards, and the like. The data storage 114 may include volatile memory, nonvolatile memory, or a combination thereof. Further, the data storage 114 may comprise non-transitory computer readable media. The data storage 114 may store various instructions, programs, and/or software that are executable by the processor 112 to implement various methods described herein. The data storage 114 may store various telematics data collected from the telematics devices 130 and/or processed by the processor 112.

The communication interface 116 may enable communication between the fleet management system 110 and other devices and/or systems, such as the telematics devices 130. The communication interface 116 may be implemented using any suitable communications devices and/or systems. For example, the communication interface 116 may comprise one or more various physical connectors, ports, or terminals such as universal serial bus (USB), ethernet, Thunderbolt, Firewire, serial advanced technology attachment (SATA), peripheral component interconnect (PCI), high-definition multimedia interface (HDMI), DisplayPort, and the like. As another example, the communication interface 116 may comprise one or more wireless interface components to connect to wireless networks such as Wi-Fi^{™}, Bluetooth^{™}, NFC, cellular, satellite, and the like. The communication interface 116 may enable various inputs and outputs to be received at and sent from the fleet management system 110. For example, the communication interface 116 may be used to telematics data from the telematics devices 130.

The telematics devices 130 also may include a processor 134, a data storage 134, and a communication interface 136. The telematics devices 130 may also comprise a sensor 138. Each of the components of the telematics devices 130 may communicate with each other and may be combined into fewer components or divided into additional subcomponents.

The processor 132 may control the operation of the telematics device 130. The processor 132 may be implemented using any suitable processing devices or systems, such as those described above in relation to the processor 112 of the fleet management system 110. The processor 132 may execute various instructions, programs, software, or a combination thereof stored on the data storage 134 to implement various methods described herein. For example, the processor 132 may process various telematics data obtained from vehicle components 122 and/or the sensor 138.

The data storage 134 may store various data for the telematics device 130. The data storage 134 may be any suitable data storage device or system, such as those described above in relation to the data storage 114 of the fleet management system 110. The data storage 134 may store various instructions, programs, software, or a combination thereof executable by the processor 132 to implement various methods described herein. As well, the data storage 134 may store various telematics data obtained from the vehicle components 122 and/or the sensor 138.

The communication interface 136 may enable communication between the telematics devices 130 and other devices or systems, such as the fleet management system 110 and the vehicle components 122. The communication interface 136 may comprise any suitable communication devices or systems, such as those described above in relation to the communication interface 116 of the fleet management system 110. The communication interface 136 may enable various inputs and outputs to be received at and sent from the telematics devices 130. For example, the communication interface 136 may be used to collect vehicle data from the vehicle components 122 and/or sensor 138, to send vehicle data to the fleet management system 110, etc.

The sensor 138 may detect and/or measure various environmental events, changes, etc. The sensor 138 may include any suitable sensing devices or systems, such as, but not limited to, location sensors, velocity sensors, acceleration sensors, orientation sensors, vibration sensors, proximity sensors, temperature sensors, humidity sensors, pressure sensors, optical sensors, audio sensors, and combinations thereof. When the telematics device 130 is installed in the vehicle 120, the sensor 138 may be used to collect telematics data that may not be obtainable from the vehicle components 122. For example, the sensor 138 may include a satellite navigation device such as a global positioning system (GPS) receiver that may measure the location of the vehicle 120. In some embodiments, the sensor 138 may comprise accelerometers, gyroscopes, magnetometers, inertial measurement units (IMUs), or the like that may measure the acceleration and/or orientation of the vehicle 120.

In some embodiments, the telematics devices 130 may operate in conjunction with one or more accessory devices 170 that are in communication therewith. The accessory devices 170 may include one or more expansion devices that may provide additional functionality to the telematics devices 130. For example, the accessory devices 170 may provide additional processing storage, communication, and/or sensing functionality through one or more additional processors, data storages, communication interfaces, and/or sensors (not pictured). The accessory devices 170 may also include adaptor devices that facilitate communication between the communication interface 136 and one or more vehicle interfaces 124, such as a cable harness. The one or more accessory devices 170 may be installed in the vehicle 120 along with the telematics devices 130.

As described herein, the telematics device 130 may be installed within the vehicle 120 removably or integrally. The vehicle 120 may include the vehicle components 122 and the one or more vehicle interfaces 124, which, as will be appreciated, may be combined into fewer components or divided into additional subcomponents. In some embodiments, the vehicle components 122 may comprise any subsystems, parts, subcomponents, or combinations thereof of the vehicle 120. For example, the vehicle components 122 may comprise powertrains, engines, transmissions, steering, braking, seating, batteries, doors, suspensions, etc. The telematics device 130 may obtain various telematics data from the vehicle components 122. For example, in some embodiments, the telematics device 130 may communicate with one or more electrical control units (ECUs) that control the vehicle components 122 or one or more internal sensors thereof.

The vehicle interface 124 may facilitate communication between the vehicle components 122 and other devices or systems. As well, the vehicle interface 124 may comprise any suitable communication devices or systems. For example, the vehicle interface 124 may include an on-board diagnostics (OBD-II) port and/or controller area network (CAN) bus port. The vehicle interface 124 may be used by the telematics device 130 to obtain telematics data from the vehicle components 122. For example, the communication interface 136 may be connected to the vehicle interface 124 to communicate with the vehicle components 122. In some embodiments, the one or more accessory devices 170 (e.g., a wire harness) may provide the connection between the communication interface 136 and the vehicle interface 124.

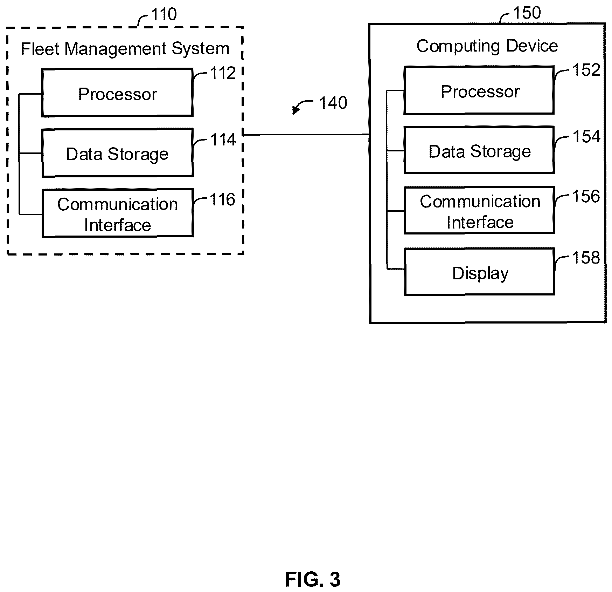

Referring now to FIG. 3, there is shown the fleet management system 110 in communication with the computing devices 150. As shown, the computing device 150 may also include a processor 152, a data storage 153, and a communication interface 156. As well, the computing device 150 may include a display 158. Each of the components of the computing device 150 may be communicate with each other and may be combined into fewer components or divided into additional subcomponents.

The processor 152 may control the operation of the computing device 150. The processor 152 may be implemented using any suitable processing devices or systems, such as those described above in relation to the processor 112 of the fleet management system 110. The processor 152 may execute various instructions, programs, software, or a combination thereof stored on the data storage 154 to implement various methods described herein. For example, the processor 152 may process various telematics data received from the fleet management system 110, the telematics devices 130, or a combination thereof.

The data storage 154 may store various data for the computing device 150. The data storage 150 may be any suitable data storage device or system, such as those described above in relation to the data storage 114 of the fleet management system 110. The data storage 154 may store various instructions, programs, software, or a combination thereof executable by the processor 152 to implement various methods described herein. As well, the data storage 154 may store various telematics data received from the fleet management system 110, the telematics devices 130, or a combination thereof.

The communication interface 156 may enable communication between the computing device 150 and other devices or systems, such as the fleet management system 110. The communication interface 156 may be any suitable communication device or system, such as those described above in relation to the communication interface 116 of the fleet management system 110. The communication interface 156 may enable various inputs and outputs to be received at and sent from the computing device 150. For example, the communication interface 156 may be used to retrieve telematics data the fleet management system 110.

The displays 158 may visually present various data for the computing device 150. The displays 158 may be implemented using any suitable display devices or systems, such as, but not limited to, light-emitting diode (LED) displays, liquid crystal displays (LCD), electroluminescent displays (ELDs), plasma displays, quantum dot displays, cathode ray tube (CRT) displays, and the like. The display 158 may be an integrated component that is integral with the computing device 150 or a standalone device that is removable connected to the computing device 150. The display 158 may display various visual representations of the telematics data.

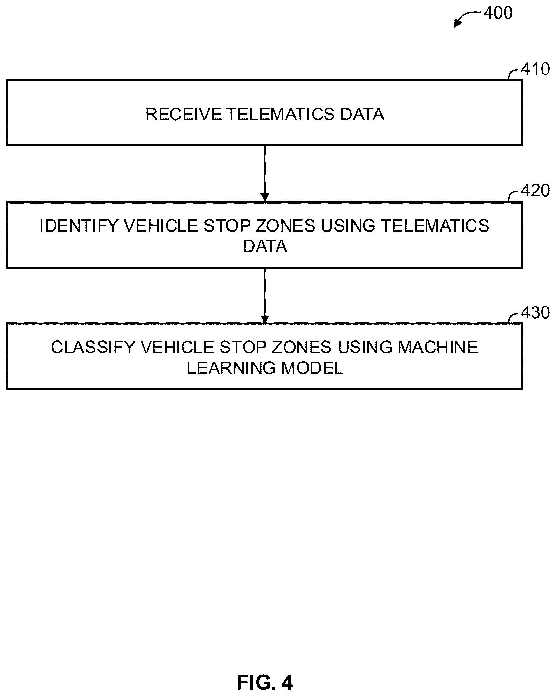

Referring now to FIG. 4, there is shown a method for identifying commercial domiciles (400) according to an embodiment of the present disclosure. As shown, the method 400 may comprise operating at least one processor to: receive telematics data originating from a plurality of telematics devices installed in a plurality of vehicles (410); identify, using the telematics data, a vehicle stop zone, each vehicle stop zone comprising a vehicle stop cluster (420); and identify the vehicle stop zone as a commercial domicile by applying to the vehicle stop cluster of the vehicle stop zone a machine learning model trained to classify vehicle stop zones based on one or more vehicle stop features thereof (430).

The method 400 may be implemented using any suitable combination of hardware and software, such as those described in reference to FIG. 1 to FIG. 3. For example, one or more operations (e.g., operations 410, 420, and/or 430) of the method 400 may be implemented at the fleet management system 110 (e.g., by the processor 112 executing instructions stored on the data storage 114), at the telematics devices 130 (e.g., by the processor 132 executing instructions stored on the data storage 134), at the computing devices 150 (e.g., by the processor 152 executing instructions stored on the data storage 154), or a combination thereof. Further, as described herein, in some embodiments, the methods of the present disclosure are capable of processing telematics data at a large-scale. Thus, it will be appreciated that the methods of the present disclosure require implementation via a computer (e.g., one or more of the processors 112, 132, and 152).

At operation 410 of the method 400, telematics data may be received. In more detail, the telematics data may be obtained from the plurality of vehicles using, for example, one or more of the systems outlined in FIG. 1 to FIG. 3. For example, the telematics device 130 (e.g., the processor 132) may receive telematics data from the sensor 138, vehicle components 122, or a combination thereof. Alternatively, or additionally, the fleet management system 110 (e.g., the processor 112) may receive telematics data from the telematics device 130. Additionally, or alternatively, the computing device 150 (e.g., the processor 152) may receive telematics data from the telematics device 130 and/or the fleet management system 110. Additionally, or alternatively, the telematics device 130, the fleet management system 110, and/or the computing device 150 may receive telematics data from one or more data storages (e.g., one or more of the data storages 114, 134, 154).

As described herein, the telematics data may be used, for example, in the systems and methods of the present disclosure at least in part to identify vehicle stop zones as well as classify vehicle stop zones as commercial domiciles. Thus, the telematics data may include at least data such as, but not limited to, engine data (e.g., ignition data), geospatial data (e.g., GPS coordinates, trip information, speed data, etc.), and vehicle identifying data (e.g., vehicle identification numbers, vehicle type, etc.).

In some embodiments, the telematics data may be preprocessed prior to and/or subsequently to being received. For example, the telematics data may be received in one or more various formats, standards, or protocols. In some cases, it may be beneficial to reformat the telematics data prior to use in the systems and methods of the present disclosure. As a further example, the telematics data may include datapoints reported at irregular frequencies and/or that correspond to mismatched points in time. In such cases, the telematics data may be interpolated so that the datapoints in each time series correspond to successive and/or equally spaced points in time. As a yet further example, and as will be described herein, the telematics data may be curve-logged telematics data, which may result in a reduced number of received datapoints. In such implementations, the reduced number of datapoints may be interpolated to provide a fulsome dataset.

Referring now to operation 420 of the method 400, a vehicle stop zone may be identified using the telematics data. As described herein, a "vehicle stop zone" may generally refer to an area within which one or more vehicles stop. Examples of vehicle stop zones include, but are not limited to, parking lots (e.g., public parking lots, private parking lots, etc.), roadways having on-street parking, intersections (e.g., where vehicles stop for traffic lights), and the like. As will be appreciated, some types of vehicle stop zones may be owned and/or operated by a commercial entity and may therefore be classified as commercial domicile. For example, many businesses that operate or manage a vehicle fleet have parking lots for parking the vehicles of the vehicle fleet when not in use (e.g., overnight).

Each vehicle stop zone may comprise a vehicle stop cluster - i.e., a cluster of vehicle stop points that indicate locations (e.g., GPS coordinates) at which one or more vehicles stopped. As will be described herein, the vehicle stop points, or at least the telematics data associated therewith, may be used in the classifying of the vehicle stop zone as a commercial domicile.

The vehicle stop zone may be identified using any suitable technique. For example, in some embodiments, the vehicle stop zone may have been previously determined (e.g., based on the area occupied by a vehicle stop cluster) and may be identified to be classified as a commercial domicile, or not, by the systems and methods of the present disclosure.

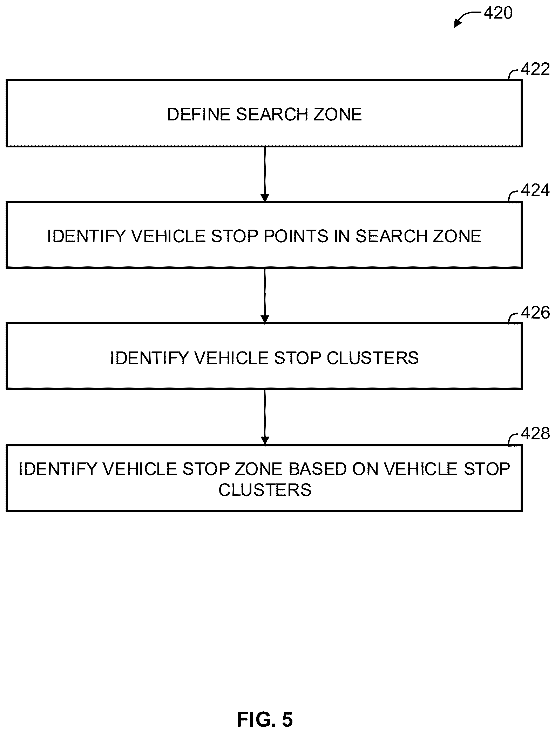

Another embodiment for identifying the vehicle stop zone 420 is illustrated in FIG. 5. As shown, the identifying of the vehicle stop zone 420 may comprise operating the at least one processor to: define a search zone corresponding to a geographical area within which the vehicle stop zone is to be identified (422); identifying, using the telematics data, a plurality of vehicle stop points located within the search zone, each of the vehicle stop points representing a location at which a vehicle stopped (424); within each search zone, identifying one or more vehicle stop clusters, each vehicle stop cluster comprising at least one of the vehicle stop points (426); and identifying the vehicle stop zone based on each of the one or more vehicle stop clusters (428).

As shown at operation 422, a search zone corresponding to a geographical area within which the vehicle stop zone is to be identified may be defined. In more detail, the search zone may be selected (e.g., by a user) to determine whether a vehicle stop zone is present within the corresponding geographical area.

How the search zone is defined is not particularly limited. For example, a user may define a search zone based on geospatial values (e.g., GPS coordinates, longitudinal values, latitudinal values, etc.). Further, as will be described herein, in some embodiments the method 400 may further comprise operating the at least one processor to receive map data (e.g., from a map information provider such as OpenStreetMaps). In such embodiments, a user may select a search zone that corresponds to pre-defined boundaries, such as country borders, state or provincial borders, city limits, counties, neighbourhoods, etc., which may be obtained from the map data. Additionally, or alternatively, in some embodiments, a user may employ one or more of the computing devices 150 to manually select the boundaries of the search zone over a portion of a map of a geographical area (e.g., obtained from the map data). In such embodiments, the search zone may be any shape as defined by the user (e.g., a rectangle, square, circle, etc.). Of course, other techniques for defining the search zone are possible and are contemplated.

As shown at operation 424 of the method 400, a plurality of vehicle stop points located within the search zone may be identified using the telematics data, each of the vehicle stop points representing a location at which a vehicle stopped. That is, each vehicle stop that occurred within the search zone may be identified using the telematics data.

As described herein, the telematics data may include geospatial data pertaining to the vehicle or vehicles from which it is collected. The geospatial data may be used to indicate the location of the vehicle or vehicles during a vehicle stop by way of, for example, GPS coordinates.

The occurrence of a vehicle stop may, in addition, be determined based on various types of telematics data. For example, a vehicle may be determined to have stopped based on engine data obtained therefrom (e.g., the engine ignition status, engine idle status, etc.), geospatial data obtained therefrom (e.g., vehicle speed data, changes in vehicle location or a lack thereof, etc.), and the like. As a yet further example, in some embodiments, a vehicle may be determined to stop if the vehicle engine ignition status is indicated to be "off" (i.e., the vehicle engine is not running), if the vehicle speed is maintained at 0 km/h for a period of time (i.e., indicating that the vehicle is not moving), if the vehicle location does not change over a period of time (i.e., also indicating that the vehicle is not moving), or a combination thereof.

At operation 426 of FIG. 5, one or more vehicle stop clusters may be identified within each search zone. Each vehicle stop cluster may generally comprise at least one vehicle stop point. However, a different minimum number of vehicle stop points per vehicle stop cluster may be selected if so desired. For example, for search zones encompassing a relatively large number of vehicle stop points, a higher minimum number of vehicle stop points per vehicle stop cluster may be suitable.

The identifying of the vehicle stop clusters may be completed using any suitable technique. For example, the identifying of the one or more vehicle stop clusters may comprise operating the at least one processor (e.g., one or more of the processors 112, 132, and 152) to identify the one or more vehicle stop clusters using a clustering algorithm. In some embodiments, the clustering algorithm may be a density-based clustering algorithm, such as, but not limited to, a Density-Based Spatial Clustering of Applications with Noise (DBSCAN) algorithm, a Hierarchical Density-Based Spatial Clustering of Applications with Noise (HDBSCAN) algorithm, and the like. As will be appreciated, parameters of the clustering algorithm (e.g., minimum cluster size, minimum sample size, cluster selection, etc.) clustering may be adjusted based on, or in conjunction with, the parameters of the search subzones (e.g., minimum or maximum number of vehicle stop points per search subzone).

At operation 428 of FIG. 5, the vehicle stop zone may be identified based at least in part on each of the one or more vehicle stop clusters. As described herein, the vehicle stop zones may represent areas of the search zone wherein vehicles tend to stop (e.g., turn engine ignition "off", not move for a period of time, etc.).

Thus, a vehicle stop cluster may generally indicate a vehicle stop zone and, in turn, a vehicle stop zone may be identified based thereon. For example, in some embodiments, the identified vehicle stop zone may correspond to a shape defined by the outermost vehicle stop points of the vehicle stop cluster (i.e., the perimeter of the vehicle stop cluster). Further, it may be the case that a vehicle stop cluster shares a vehicle stop point with one or more other vehicle stop cluster. One example of when such a case may arise is when a parking lot is large enough that groups of vehicles may park in distinct areas thereof (e.g., to be closer to a particular access or exit point), producing two or more vehicle stop clusters that are close enough in proximity to share a vehicle stop point therebetween. As will be appreciated, in that example, the parking lot should generally be identified as a single vehicle stop zone, rather than two or more distinct vehicle stop zones (i.e., based on the two or more vehicle stop clusters). Thus, it may be useful to merge the vehicle stop clusters that share a vehicle stop point to thereby identify a single vehicle stop zone that more accurately reflects the parking lot. For example, in some embodiments, the identifying of the vehicle stop zone based on the one or more vehicle stop clusters 428 may further comprise operating the at least one processor to merge vehicle stop clusters that share one or more of the vehicle stop points.

Another example of when multiple vehicle stop clusters may share one or more vehicle stop points is when a vehicle stop cluster extends between a plurality of search zones. In that example, the vehicle stop cluster may be "split" by the search zones, as each search zone may identify a portion of the vehicle stop cluster as a distinct vehicle stop cluster. Thus, it may be useful in such cases to merge vehicle stop clusters located within different search zones that share one or more of the vehicle stop points. For example, in some embodiments, the identifying of the vehicle stop zone based on the one or more vehicle stop clusters 428 may further comprise operating the at least one processor to merge vehicle stop clusters located within different search zones that share one or more of the vehicle stop points.

Further, it may be the case that a particularly large vehicle stop cluster may be identified. For example, in particularly densely populated areas (e.g., New York City, NY) a plurality of distinct vehicle stop clusters may be identified as a single vehicle stop cluster (and, in turn, a single vehicle stop zone) due at least in part to the proximity of the vehicle stop clusters to one another. Thus, it may be useful to recluster (e.g., reapply a clustering algorithm) "oversized" vehicle stop clusters that may include a plurality of distinct vehicle stop clusters therein.

For example, in some embodiments, the identifying of the vehicle stop zones 420 may further comprise operating the at least one processor to: identify an oversized vehicle stop cluster that occupies an area greater than a predetermined threshold; recluster the oversized vehicle stop cluster into a plurality of vehicle stop subclusters; and identify the vehicle stop zone based on each of the plurality of vehicle stop subclusters. In such embodiments, the predetermined threshold may be any suitable threshold (e.g., 0.02 square miles, or more, or less). The reculstering may be performed in the same manner as described herein in relation to operation 426 of FIG. 5. However, as will be appreciated, if a clustering model or algorithm is employed (e.g., DBSCAN and/or HDBSCAN) it may be useful to adjust one or more parameters thereof in order to distinguish between proximal, distinct vehicle stop clusters. Further, and as will be appreciated, the identifying of the vehicle stop zone based on each of the plurality of vehicle stop subclusters may be performed in the same manner as the identifying of the vehicle stop zones based on the one or more vehicle stop clusters 428 described herein. For example, in some embodiments, the identifying of the vehicle stop zone based each of the plurality of vehicle stop subclusters further comprises operating the at least one processor to merge vehicle stop subclusters that share one or more of the vehicle stop points.

Further, it may be useful, when reclustering oversized vehicle stop clusters, to ajust the search zone to one that more closely fits the oversized vehicle stop cluster so that, for example, vehicle stop clusters that have already been identified are not unnecessarily reclustered. For example, in some embodiments, the identifying of the vehicle stop zone based each of the plurality of vehicle stop subclusters may further comprise operating the at least one processor to define a reclustering search zone that encompasses at least the oversized vehicle stop zone. In such embodiments, the reclustering search zone may be defined in the same manner as described above in relation to operation 422 of FIG.5.

Prior to classification, it may also be useful to filter any identified vehicle stop zones that may not be classified as commercial domiciles based on, for example, on or more parameters thereof. For example, vehicle stop zones may be filtered based parameters such as, but not limited to, cluster size, cluster density, cluster shape, cluster location, distinct vehicle stops, and the like.

For example, vehicle stop zones based on vehicle stop clusters that are overly large may not be commercial domiciles and may instead indicate that such vehicle stop zones may require reclustering. As another example, vehicle stop zones that lack a particular cluster density may not be indicative of a commercial domicile, as commercial domiciles may generally have a relatively high cluster density (e.g., due to many vehicles coming and going from the location per day, week, etc.). In a yet further example, vehicle stop zones that lack a particular number of vehicle stops by distinct vehicles may also indicate that the vehicle stop zone is not a commercial domicile, as such domiciles may generally experience distinct vehicles stopping multiple times during a given time period (e.g., due to the vehicle being owned by the commercial entity of the commercial domicile). As well, in some cases, the shape of the vehicle stop zone may indicate that the vehicle stop zone may not be a commercial domicile. For example, if the vehicle stop zone (e.g., the vehicle stop cluster thereof) is generally linear, that may indicate that the vehicle stop zone corresponds to on-street parking, rather than a commercial domicile. Further, the location of the vehicle stop zone may also indicate whether the vehicle stop zone is a commercial domicile. For example, if the vehicle stop zone is located in, or overlaps with, a residential area (e.g., as determined using map data supplied from a map information provider), the vehicle stop zone may not be a commercial domicile.

Of course, other filtering criteria may be employed if so desired.

Referring back to FIG. 4, there is shown at operation 430 that the vehicle stop zone may be identified as a commercial domicile by applying to the vehicle stop cluster of the vehicle stop zone a machine learning model trained to classify vehicle stop zones based one or more vehicle stop features thereof. That is, the vehicle stop zone may be classified by inputting into the machine learning model telematics data related to the vehicle stop cluster thereof.

The type of machine learning model employed is not particularly limited. Generally, the machine learning model may be one that is trainable to classify based on received inputs. Suitable examples of machine learning models include, but are not limited to, a logistic regression model, a support vector machine (SVM) model, a k-nearest neighbors (KNN) model, a random forest model, an XGBoost model, or a combination thereof.

As described herein, the machine learning model is trained to classify stop zones based on one or more vehicle stop features thereof. As used herein, "vehicle stop feature" may generally refer to telematics data associated with a vehicle stop zone, a vehicle stop cluster of the vehicle stop zone, a vehicle stop point of the vehicle stop cluster, etc. The machine learning model may be trained to classify vehicle stop zones based on such features using any suitable technique.

With respect to particular vehicle stop features to be used by the machine learning model to classify the vehicle stop zone, the inventors of the present disclosure surprisingly found that stop time features (e.g., amount of time stopped within the vehicle stop zone), stop count features (e.g., number of stops within the vehicle stop zone), stop time period features (e.g., when vehicles are stopped within the vehicle stop zone), trip features (e.g., how many round trips are completed from the vehicle stop zone), operator features (e.g., how many vehicles owned by a particular operator stop within the vehicle stop zone), or combinations thereof may be particularly useful for accurate classification of the vehicle stop zones by the at least one machine learning model.

For example, the one or more vehicle stop features may comprise an operator stop duration proportion (i.e., a proportion of the total time the vehicle, or vehicles, of a particular owner or operator are stopped the vehicle stop zone vs. all other vehicle stop zones), a vehicle stop duration proportion (i.e., a proportion of the total time of a vehicle is stopped in the vehicle stop zone vs. all other vehicle stop zones), a distinct operator vehicle stop count (i.e., the total number of distinct vehicles of an owner or operator that stop in the vehicle stop zone), a median operator trip duration (i.e., the median duration of a trip completed by a vehicle before stopping in the vehicle stop zone), a weekend trip stop proportion (i.e., a proportion of trips completed by a vehicle, or vehicles, of an owner or operator that stop on a weekend in the vehicle stop zone vs. all other trips by the vehicle, or vehicles, of the owner or operator in the vehicle stop zone), an operator round trip proportion (i.e., the proportion of trips by a vehicle, or vehicles, of an owner or operator that start and stop in the vehicle stop zone vs. all the trips by the vehicle, or vehicles, of the owner or operator in the vehicle stop zone), a median stop duration (i.e., the median amount of time that a vehicle stops in the vehicle stop zone), or a combination thereof.

Thus, by applying the at least one machine learning model to one or more vehicle stop features of the vehicle stop zone, the vehicle stop zone may be classified as a commercial domicile, or not.

In some cases, it may be useful to identify the commercial domiciles for display to a user of the systems and methods of the present disclosure. For example, in some embodiments, the commercial domicile may be enclosed, or represented, by a polygon for easy identification by a user (e.g., a polygon overlayed on a map). However, as described herein, vehicle stop zones defined solely by a vehicle stop cluster thereof may shift over time (e.g., the size, the shape, and/or the location of the vehicle stop zone may change) regardless of any actual changes to the vehicle stop zone, due at least in part to the particular arrangement of vehicle stop points of the vehicle stop cluster shifting over time.

The inventors of the present disclosure surprisingly found that using map data to inform the boundaries of the commercial domicile may be useful for avoiding any shift caused by the vehicle stop cluster of the vehicle stop zone. For example, in some embodiments, the method 400 may further comprise operating the at least one processor to: generate an initial polygon encompassing the commercial domicile; identify, using map data, one or more road segments that intersect the polygon; generate from the initial polygon a plurality of sub-polygons based on the one or more road segments that intersect the polygon; and generating a domicile polygon based on one or more of the sub-polygons within which a vehicle stop point is located.

In such embodiments, the initial polygon may be generated using any suitable technique. For example, a bounding polygon may be generated based on the outermost vehicle stop points of the vehicle stop cluster of the vehicle stop zone. The one or more road segments may be identified, for example, using map data (e.g., as provided by a map information provider) and the location, and area, of the initial polygon to select road segments that intersect therewith. The plurality of sub-polygons may be generated, for example, based on the one or more road segments enclosing portions of the initial polygon (e.g., if an initial polygon overlaps with a plurality of city blocks, each sub-polygon may be generated to be encompassed by a city block as defined by the one or more road segments). The domicile polygon (i.e., a polygon representing, or encompassing, the commercial domicile) may be generated based on the sub-polygon, or sub-polygons, within which a vehicle stop point is located, as the presence of a vehicle stop point may indicate that the sub-polygon forms at least a portion of the commercial domicile. For example, in some embodiments, the generating of the domicile polygon may comprise operating the at least one processor to: filter any sub-polygons within which a vehicle stop point is not located; and merge any sub-polygons within which a vehicle stop point is located. In such embodiments, any sub-polygons within which no vehicle stop points are present may be removed, as such sub-polygons may not form a portion of the domicile polygon, while any sub-polygons within which a vehicle stop point is located may be merged, as such sub-polygons may form at least a portion of the domicile polygon.

The resulting domicile polygon, by defining boundaries thereof on infrastructure (e.g., the one or more roadways) may be particularly spatially stable in that the boundaries may not shift over time and therefore may be suitable for use for representing the corresponding commercial domicile to a user on, for example, a display of a computing device (e.g., one or more of the computing devices 150).

In the present disclosure, all terms referred to in singular form are meant to encompass plural forms of the same. Likewise, all terms referred to in plural form are meant to encompass singular forms of the same. Unless defined otherwise, all technical and scientific terms used herein have the same meaning as commonly understood by one of ordinary skill in the art to which this disclosure pertains.

As used herein, the term "about" refers to an approximately +/-10 % variation from a given value. It is to be understood that such a variation is always included in any given value provided herein, whether or not it is specifically referred to.

It should be understood that the compositions and methods are described in terms of "comprising," "containing," or "including" various components or steps, the compositions and methods can also "consist essentially of or "consist of the various components and steps. Moreover, the indefinite articles "a" or "an," as used in the claims, are defined herein to mean one or more than one of the element that it introduces.

Throughout this specification and the appended claims, infinitive verb forms are often used, such as "to operate" or "to couple". Unless context dictates otherwise, such infinitive verb forms are used in an open and inclusive manner, such as "to at least operate" or "to at least couple".

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, whenever a numerical range with a lower limit and an upper limit is disclosed, any number and any included range falling within the range are specifically disclosed. In particular, every range of values (of the form, "from about a to about b," or, equivalently, "from approximately a to b," or, equivalently, "from approximately a-b") disclosed herein is to be understood to set forth every number and range encompassed within the broader range of values even if not explicitly recited. Thus, every point or individual value may serve as its own lower or upper limit combined with any other point or individual value or any other lower or upper limit, to recite a range not explicitly recited.

The Drawings are not necessarily to scale and may be illustrated by phantom lines, diagrammatic representations, and fragmentary views. In certain instances, details that are not necessary for an understanding of the exemplary embodiments or that render other details difficult to perceive may have been omitted.

The specification includes various implementations in the form of block diagrams, schematics, and flowcharts. A person of skill in the art will appreciate that any function or operation within such block diagrams, schematics, and flowcharts can be implemented by a wide range of hardware, software, firmware, or combination thereof. As non-limiting examples, the various embodiments herein can be implemented in one or more of: application-specific integrated circuits (ASICs), standard integrated circuits (ICs), programmable logic devices (PLDs), field-programmable gate arrays (FPGAs), computer programs executed by any number of computers or processors, programs executed by one or more control units or processor units, firmware, or any combination thereof.

The disclosure includes descriptions of several processors. Said processors can be implemented as any hardware capable of processing data, such as application-specific integrated circuits (ASICs), standard integrated circuits (ICs), programmable logic devices (PLDs), field-programmable gate arrays (FPGAs), logic circuits, or any other appropriate hardware. The disclosure also includes descriptions of several non-transitory processor-readable storage mediums. Said non-transitory processor-readable storage mediums can be implemented as any hardware capable of storing data, such as magnetic drives, flash drives, RAM, or any other appropriate data storage hardware. Further, mention of data or information being stored at a device generally refers to the data information being stored at a non-transitory processor-readable storage medium of said device.

Therefore, the present disclosure is well adapted to attain the ends and advantages mentioned as well as those that are inherent therein. The particular embodiments disclosed above are illustrative only, as the present disclosure may be modified and practiced in different but equivalent manners apparent to those skilled in the art having the benefit of the teachings herein. Although individual embodiments are dis-cussed, the disclosure covers all combinations of all those embodiments. Furthermore, no limitations are intended to the details of construction or design herein shown, other than as described in the claims below. Also, the terms in the claims have their plain, ordinary meaning unless otherwise explicitly and clearly defined by the patentee. It is therefore evident that the particular illustrative embodiments disclosed above may be altered or modified and all such variations are considered within the scope and spirit of the present disclosure. If there is any conflict in the usages of a word or term in this specification and one or more patent(s) or other documents that may be incorporated herein by reference, the definitions that are consistent with this specification should be adopted.

Many obvious variations of the embodiments set out herein will suggest themselves to those skilled in the art in light of the present disclosure. Such obvious variations are within the full intended scope of the appended claims.

## Claims

1. A system for identifying commercial domiciles, the system comprising:
at least one data storage operable to store telematics data originating from a plurality of telematics devices installed in a plurality of vehicles; and
at least one processor in communication with the at least one data storage, the at least one processor operable to:
identify, using the telematics data, a vehicle stop zone, each vehicle stop zone comprising a vehicle stop cluster; and
identify the vehicle stop zone as a commercial domicile by applying to the vehicle stop cluster of the vehicle stop zone at least one machine learning model trained to classify vehicle stop zones based on one or more vehicle stop features thereof.

2. The system of claim 1, wherein the at least one processor is operable to identify the vehicle stop zone by:
defining a search zone corresponding to a geographical area within which the vehicle stop zone is to be identified;
identifying, using the telematics data, a plurality of vehicle stop points located within the search zone, each of the vehicle stop points representing a location at which a vehicle stopped;
within each search zone, identifying one or more vehicle stop clusters, each vehicle stop cluster comprising at least one of the vehicle stop points; and
identifying the vehicle stop zone based at least in part on each of the one or more vehicle stop clusters.

3. The system of claim 2, wherein the at least one processor is further operable to identify the vehicle stop zone by:
identifying an oversized vehicle stop cluster that occupies an area greater than a predetermined threshold;
reclustering the oversized vehicle stop cluster into a plurality of vehicle stop subclusters; and
identifying the vehicle stop zone based on each of the plurality of vehicle stop subclusters.

4. The system of any one of claims 1 to 3, wherein the one or more vehicle stop features comprise stop time features, stop count features, stop time period features, trip features, operator features, or combinations thereof.

5. The system of claim 4, wherein the one or more vehicle stop features comprise an operator stop duration proportion, a vehicle stop duration proportion, a distinct operator vehicle stop count, a median operator trip duration, a weekend trip stop proportion, an operator round trip proportion, a median stop duration, or a combination thereof.

6. The system of any one of claims 1 to 5, wherein the at least one processor is further operable to:
generate an initial polygon encompassing the commercial domicile;
identify, using map data, one or more road segments that intersect the polygon;
generate from the initial polygon a plurality of sub-polygons based on the one or more road segments that intersect the polygon; and
generating a domicile polygon based on one or more of the sub-polygons within which a vehicle stop point is located.

7. The system of claim 6, wherein the at least one processor is operable to generate the domicile polygon by:
filtering any sub-polygons within which a vehicle stop point is not located; and
merging any sub-polygons within which a vehicle stop point is located.

8. A method for identifying commercial domiciles, the method comprising operating at least one processor to:
receive telematics data originating from a plurality of telematics devices installed in a plurality of vehicles;
identify, using the telematics data, a vehicle stop zone, each vehicle stop zone comprising a vehicle stop cluster; and
identify the vehicle stop zone as a commercial domicile by applying to the vehicle stop cluster of the vehicle stop zone at least one machine learning model trained to classify vehicle stop zones based on one or more vehicle stop features thereof.

9. The method of claim 8, wherein the identifying of the vehicle stop zone comprises operating the at least one processor to:
define a search zone corresponding to a geographical area within which the vehicle stop zone is to be identified;
identify, using the telematics data, a plurality of vehicle stop points located within the search zone, each of the vehicle stop points representing a location at which a vehicle stopped;
within each search zone, identify one or more vehicle stop clusters, each vehicle stop cluster comprising at least one of the vehicle stop points; and
identify the vehicle stop zone based at least in part on each of the one or more vehicle stop clusters.

10. The method of claim 9, wherein identifying of the vehicle stop zone further comprises operating at least one processor to:
identify an oversized vehicle stop cluster that occupies an area greater than a predetermined threshold;
recluster the oversized vehicle stop cluster into a plurality of vehicle stop subclusters; and
identify the vehicle stop zone based on each of the plurality of vehicle stop subclusters.

11. The method of any one of claims 8 to 10, wherein the one or more vehicle stop features comprise stop time features, stop count features, stop time period features, trip features, operator features, or combinations thereof.

12. The method of claim 11, wherein the one or more vehicle stop features comprise an operator stop duration proportion, a vehicle stop duration proportion, a distinct operator vehicle stop count, a median operator trip duration, a weekend trip stop proportion, an operator round trip proportion, a median stop duration, or a combination thereof.

13. The method of any one of claims 8 to 12, further comprising operating the at least one processor to:
generate an initial polygon encompassing the commercial domicile;
identify, using map data, one or more road segments that intersect the polygon;
generate from the initial polygon a plurality of sub-polygons based on the one or more road segments that intersect the polygon; and
generating a domicile polygon based on one or more of the sub-polygons within which a vehicle stop point is located.

14. The method of claim 13, wherein the generating of the domicile polygon comprises operating the at least one processor to:
filter any sub-polygons within which a vehicle stop point is not located; and
merge any sub-polygons within which a vehicle stop point is located.

15. A non-transitory computer-readable medium having instructions stored thereon executable by at least one processor to implement the method according to any one of claims 8 to 14.
